# EUROPEAN PATENT APPLICATION

(11) **EP 3 456 492 A1**
(43) Date of publication of application: **20.03.2019**
(21) Application number: 17796191.9
(22) Date of filing: 10.05.2017
(51) Int. Cl.: B26D 5/34, B26D 5/00, B65H 7/14

(54) **MEDIUM END-DETECTING DEVICE**

(30) Priority: 11.05.2016 JP 2016095549
(71) Applicant: Graphtec Corporation, Yokohama-shi, Kanagawa 244-8503 (JP)
(72) Inventor: YOSHIDA, Hiroshi, Yokohama-shi Kanagawa 244-8503 (JP); SAKAI, Kazuhiro, Yokohama-shi Kanagawa 244-8503 (JP)
(74) Representative: Grünecker Patent- und Rechtsanwälte PartG mbB
(86) International application number: PCT/JP2017/017711
(87) International publication number: WO 2017/195831

(57) **Abstract**

To properly detect an end of a colored medium. A cutting device 1 includes a light emission unit 10, a light receiving sensor 14 configured to receive light emitted from the light emission unit 10 at a position facing the light emission unit 10, a platen 2 configured to support a colored medium S between the light emission unit 10 and the light receiving sensor 14, and a paper end detection mechanism 21 configured to detect an end of the colored medium S on the platen 2. The light receiving sensor 14 is freely movable. The degree of light reception by the light receiving sensor 14 is switched for the light from the light emission unit 10 by movement of the light receiving sensor 14, and in this manner, the paper end detection mechanism 21 detects the end of the colored medium S in a movement direction of the light receiving sensor 14.

## Description

### TECHNICAL FIELD

The present invention relates to a medium end-detecting device configured to detect an end of a medium, and particularly relates to a medium end-detecting device capable of detecting an end of a colored medium.

### BACKGROUND ART

It has been already known that an end of a medium is detected in a device configured to perform, e.g., image formation processing or the processing of cutting a portion of the medium for the medium, such as a printer or a cutting plotter. An optical technique is typical as the technique of detecting the end of the medium, and one example thereof is a technique described in Patent Literature 1.

According to the technique described in Patent Literature 1, an irradiator configured to irradiate a medium with light while moving above the medium and a light receiver configured to receive reflected light resulting from reflection of the irradiated light from the irradiator are used. When receiving the reflected light, the light receiver outputs an electric signal at a level corresponding to optical properties of the reflected light. In this case, there is an optical difference between the reflected light when the light irradiated from the irradiator is reflected on a surface of the medium and the reflected light when the light is reflected on the outside of the medium (i.e., surfaces of other members than the medium). Thus, when a light irradiation destination is moved along a horizontal width direction of the medium, the level of the output signal from the light receiver changes (in a precise sense, the level is switched) when the light irradiation destination passes above a side end of the medium. Based on such an output signal level difference, the side end of the medium can be detected.

### CITATION LIST

### PATENT LITERATURE

PATENT LITERATURE 1: JP 2013-209189 A

### SUMMARY OF INVENTION

### TECHNICAL PROBLEM

However, the technique described in Patent Literature 1 is on an assumption that there is the optical difference between the reflected light reflected on the medium and the reflected light reflected on the outside of the medium. Specifically, in Patent Literature 1, the reflected light reflected on the medium and the reflected light reflected on a member (e.g., a platen) on the outside of the medium are received for detecting the end of the medium.

On the other hand, in a case where no clear difference between these two types of reflected light is recognized, it is difficult to detect the end of the medium by the above-described technique. That is, the technique described in Patent Literature 1 is unsuitable for the case of detecting an end of a colored medium. Particularly, in a device with a relatively-high frequency of utilizing a colored medium, a case easily occurs, in which a medium size cannot be accurately grasped due to improper detection of the end of the colored medium. As a result, there is a probability that processing for the medium cannot be properly performed in the above-described device.

For this reason, the present invention has been made in view of the above-described problem, and is intended to provide a medium end-detecting device capable of properly detecting an end of a colored medium.

### SOLUTION TO PROBLEM

According to a medium end-detecting device of the present invention, the above-described problem is solved by the medium end-detecting device including (A) a light emitter configured to emit light, (B) a light receiver arranged at a position facing the light emitter and configured to receive the light emitted from the light emitter, (C) a support member configured to support a colored medium between the light emitter and the light receiver, and (D) a detection mechanism configured to detect an end of the colored medium supported by the support member. (E) One of the light emitter or the light receiver is freely movable. (F) The degree of light reception by the light receiver is switched for the light emitted from the light emitter by movement of the one of the light emitter or the light receiver, and in this manner, the detection mechanism detects the end of the colored medium in a movement direction of the one of the light emitter or the light receiver.

In the medium end-detecting device of the present invention configured as described above, the end of the medium can be detected without the need for the typical medium end-detecting method in which the reflected light upon irradiation of the medium and the member on the outside of the medium with light is received. Specifically, in the medium end-detecting device of the present invention, the light receiver directly receives the light emitted from the light emitter. Then, one of the light emitter or the light receiver moves to change the degree of light reception by the light receiver when such a unit passes above the end of the medium. That is, the light from the light emitter easily reaches the light receiver on the outside of the medium, and on the other hand, is difficult to reach the light receiver on the inside of the medium (in an area on the inside of an outer edge of the medium). Based on such a change in the degree of light reception, the end of the medium (in a precise sense, the end in the movement direction of the light emitter or the light receiver) is detected. With such a configuration, the end of the colored medium can be properly detected.

Preferably, in the above-described medium end-detecting device, the state of the light receiver changes, by movement of the one of the light emitter or the light receiver, between a first state in which the light receiver receives the light emitted from the light emitter and a second state in which the light emitted from the light emitter is blocked by the colored medium and is not received by the light receiver. The state of the light receiver is switched from one of the first and second states to the other one of the first and second states, and in this manner, the detection mechanism detects the end of the colored medium in the movement direction.

In the above-described configuration, the state of the light receiver changes, in association with movement of one of the light emitter or the light receiver, between the state (the first state) in which the light receiver receives the light emitted from the light emitter and the state (the second state) in which the light emitted from the light emitter is blocked by the colored medium and is not received by the light receiver. When one unit as described above passes above the end of the medium, the state of the light receiver is switched, and in this manner, the end of the medium is detected. With such a configuration, the end of the colored medium can be properly detected based on switching of the state (a light receiving state) of the light receiver.

More preferably, the above-described medium end-detecting device further includes a moving body configured to slidably move with the moving body facing the support member. The one of the light emitter or the light receiver slidably moves integrally with the moving body in a state in which the one of the light emitter or the light receiver is attached to the moving body. The detection mechanism detects the end of the colored medium in a slide movement direction of the moving body.

In the above-described configuration, one of the light emitter or the light receiver slidably moves integrally with the moving body. When one unit as described above passes above the end of the medium, the degree of light reception by the light receiver is switched for the light emitted from the light emitter. Thus, the end of the medium in the slide movement direction of the moving body can be properly detected.

Much more preferably, the above-described medium end-detecting device further includes a conveyance mechanism configured to convey the colored medium in a conveyance direction. The conveyance mechanism conveys the colored medium such that the colored medium passes through a portion between the light emitter and the light receiver in a height direction of the medium end-detecting device. The degree of light reception is switched by conveyance of the colored medium by the conveyance mechanism, and in this manner, the detection mechanism detects the end of the colored medium in the conveyance direction.

In the above-described configuration, when the colored medium passes through the portion between the light receiver and the light emitter by conveyance by the conveyance mechanism, the degree of light reception by the light receiver is switched. Thus, the end of the medium in the conveyance direction can be properly detected.

Still much more preferably, the above-described medium end-detecting device is a cutting device configured to cut a cutting target portion from the colored medium having a surface on which an image is formed. The moving body includes a cutter, and moves while causing the cutter to contact an outer edge of the cutting target portion of the colored medium supported by the support member.

In the above-described configuration, the end of the colored medium can be properly detected in the cutting device configured to perform cutting processing targeted for the colored medium.

Still much more preferably, in the above-described medium end-detecting device, the moving body includes an irradiator configured to irradiate the colored medium supported by the support member with light, and a light receiving sensor configured to receive reflected light resulting from reflection of the irradiated light from the irradiator on the surface of the colored medium. A pattern detection mechanism is further provided, the pattern detection mechanism being configured to detect, based on an index value regarding the reflected light received by the light receiving sensor, a pattern indicating a reference position upon cutting of the cutting target portion in the image formed on the surface of the colored medium. The light receiver includes the light receiving sensor, and as the one of the light emitter or the light receiver, slidably moves integrally with the moving body.

In the above-described configuration, the light receiving sensor configured to detect (read) the pattern formed on the surface of the colored medium is utilized as the light receiver necessary for detecting the end of the colored medium. As described above, the light receiving sensor for pattern reading is also used as the light receiver for medium end detection. Thus, an increase in the number of components can be suppressed without the need for separately placing the light receiver.

Still much more preferably, in the above-described medium end-detecting device, the light emitter includes a light source and a light guide body configured to transmit light from the light source. The support member is provided with a groove for housing the light guide body. In a state in which the colored medium supported by the support member covers a portion of the light guide body housed in the groove, when the light receiver faces an exposed portion other than the portion covered with the colored medium in the light guide body housed in the groove, the light receiver receives light output from the light guide body through the exposed portion.

In the above-described configuration, the light emitter includes the light source and the light guide body. The light guide body is housed in the groove formed at the support member. Moreover, in a state in which the colored medium supported by the support member covers the portion of the light guide body housed in the groove, when the light receiver faces the exposed portion other than the portion covered with the colored medium in the light guide body housed in the groove, the light receiver receives the light output from the light guide body through the exposed portion. On the other hand, when the light receiver is present above the portion of the light guide body covered with the colored medium, the light receiver does not receive the light from the light guide body. Thus, the degree of light reception by the light receiver is different between a case where the light receiver faces the portion of the light guide body covered with the colored medium and a case where the light receiver faces the exposed portion. Accordingly, when the light receiver passes above a boundary position (in other words, an end position of the colored medium) between the portion of the light guide body covered with the colored medium and the exposed portion, the degree of light reception by the light receiver is switched, and in this manner, the end of the colored medium can be properly detected.

Still much more preferably, in the above-described medium end-detecting device, the light guide body includes an elongated member, and multiple recessed portions formed for diffusely reflecting light travelling in the light guide body are, at the light guide body, provided in a longitudinal direction of the light guide body.

In the above-described configuration, the multiple recessed portions formed at the light guide body function as prisms, and the light is diffusely reflected on the recessed portions. Thus, the light propagating in the light guide body is released from each portion of the light guide body. As a result, the light emitter can properly emit the light upon detection of the end of the colored medium.

In the above-described medium end-detecting device, the light source may be attached to an end portion of the light guide body in the longitudinal direction. The light guide body may include a center region farther from the light source in the longitudinal direction, and an end region closer to the light source in the longitudinal direction. Multiple ones of the recessed portions may be formed in each of the center region and the end region. The interval between the recessed portions in the center region may be shorter than the interval between the recessed portions in the end region.

Alternatively, in the above-described medium end-detecting device, the light source may be attached to an end portion of the light guide body in the longitudinal direction. The light guide body may include a center region farther from the light source in the longitudinal direction, and an end region closer to the light source in the longitudinal direction. Multiple ones of the recessed portions may be formed in each of the center region and the end region. The length of each recessed portion in the longitudinal direction formed in the center region may be longer than the length of each recessed portion in the longitudinal direction formed in the end region.

In each of the above-described two configurations, the degree of light emission in the center region of the light guide body is adjusted to the degree of light emission in the end region. Thus, the degree of light emission in each portion of the light guide body can be uniform.

Still much more preferably, in the above-described medium end-detecting device, an opening of the groove is closed by a translucent film, and the light receiver receives light having output from the light guide body through the exposed portion and having passed through the translucent film.

In the above-described configuration, the opening of the groove for housing the light guide body is closed by the translucent film. Thus, the light guide body in the groove can be protected by the translucent film.

### ADVANTAGEOUS EFFECTS OF INVENTION

According to the present invention, the difference in the degree of light reception by the light receiver between the area where the colored medium is present and the area positioned on the outside of the colored medium in the movement direction when one of the light emitter or the light receiver moves is utilized so that the end of the colored medium can be properly detected.

### BRIEF DESCRIPTION OF DRAWINGS

FIG. 1 is a view of a medium end-detecting device according to one embodiment of the present invention.
FIG. 2 is a schematic side view of the medium end-detecting device according to one embodiment of the present invention.
FIG. 3 is a diagram of a configuration of the medium end-detecting device according to one embodiment of the present invention.
FIG. 4 is a view of a support member and a light emitter.
FIG. 5A is an enlarged view of a portion of a light guide body.
FIG. 5B is a view of a first variation of a structure of the light guide body.
FIG. 5C is a view of a second variation of the structure of the light guide body.
FIG. 5D is a view of a third variation of the structure of the light guide body.
FIG. 6A is a view for describing the method for detecting a tip end of a colored medium (No. 1).
FIG. 6B is a view for describing the method for detecting the tip end of the colored medium (No. 2).
FIG. 6C is a view for describing the method for detecting the tip end of the colored medium (No. 3).
FIG. 7 is a view when a moving body and the support member are viewed from above.
FIG. 8A is a view for describing the method for detecting a side end of the colored medium (No. 1).
FIG. 8B is a view for describing the method for detecting the side end of the colored medium (No. 2).
FIG. 8C is a view for describing the method for detecting the side end of the colored medium (No. 3).

### DESCRIPTION OF EMBODIMENTS

Hereinafter, a medium end-detecting device according to one embodiment (the present embodiment) of the present invention will be described. In description below, a cutting device will be described as one example of the medium end-detecting device. That is, the cutting device described below is equivalent to the medium end-detecting device of the present invention, and a configuration thereof is equivalent to a configuration example of the medium end-detecting device of the present invention.

In description below, an "upper-to-lower direction" is equivalent to a height direction of the cutting device as the medium end-detecting device, and is normally coincident with a perpendicular direction.

### <<Outline of Cutting Device according to the Present Embodiment>>

The outline of the cutting device (hereinafter referred to as a "present device 1") according to the present embodiment will be described. The present device 1 is a so-called cutting plotter, and is a machine tool having the function of cutting a portion of a medium. Cut paper, a sheet-shaped film, rolled paper such as label paper, cardboard, and other cuttable sheet-shaped members are available as the medium.

Normally, the present device 1 performs cutting processing targeted for the medium (hereinafter referred to as an "image-formed medium") having a surface on which an image is formed. In a precise sense, the present device 1 cuts a cutting target portion from the image-formed medium. The cutting target portion is an image-formed medium portion to be cut, and for example, is a portion where the image is formed (simply, a portion surrounded by the outline of the image).

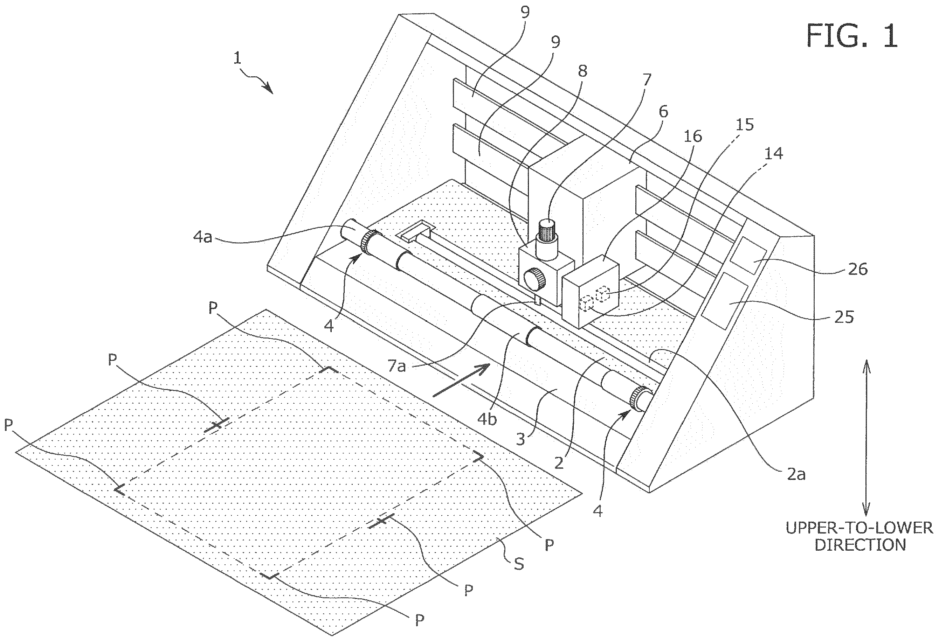

The present device 1 is utilized in a state illustrated in FIG. 1. FIG. 1 is a perspective view of the present device 1. In this figure, the upper-to-lower direction is indicated by an arrow. In this figure, a colored medium S (in a precise sense, colored cut paper) is illustrated as one example of the image-formed medium utilized in the present device 1.

Upon utilization of the present device 1, the image-formed medium is injected into a front opening of the present device 1 by a hand or a not-shown feeder. In this manner, the image-formed medium is supplied into the present device 1, and then, moves along a conveyance path formed in the device. Then, the cutting processing begins when the image-formed medium reaches a predetermined position in the conveyance path. When the cutting processing is executed, the cutting target portion is cut from the image-formed medium by a later-described cutter 7a. After the cutting processing has been completed, the cutting target portion of the image-formed medium is discharged together with other portions to the outside of the device through a back opening of the present device 1, or is returned to a position (an initial position) at the start of the cutting processing. In a case where the medium is a continuous medium such as rolled paper, full-width cutting is performed for the above-described continuous medium by the cutter 7a after the cutting processing, and then, the continuous medium is in a standby state with a predetermined amount (e.g., a length set as a target unit for the cutting processing) of the continuous medium being sent out.

The media utilized in the present device 1 include a medium whose ground color is colored, i.e., the colored medium S. That is, the present device 1 performs the cutting processing targeted for the colored medium as the image-formed medium. The term "colored" means other colors than a clear and colorless state, and also includes a combination with a pattern or a design.

### <<Basic Configuration of Cutting Device according to the Present Embodiment>>

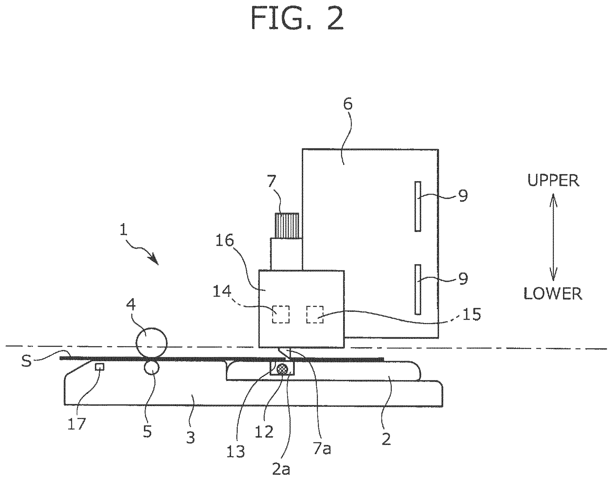

A basic configuration of the present device 1 will be described with reference to FIGS. 1 and 2. FIG. 2 is a schematic side view (in a precise sense, a schematic sectional view) of the present device 1. In this figure, the upper-to-lower direction is indicated by an arrow. Hereinafter, the case of utilizing the colored medium S is assumed in description of the configuration of the present device 1.

As illustrated in FIGS. 1 and 2, the present device 1 has, as main components, a platen 2, a base member 3, pinch rollers 4, drive rollers 5, a carriage 6, a cutting pen 7, and an actuator 8.

The platen 2 is equivalent to a support member, and is configured to support the colored medium S with the colored medium S being placed on an upper surface of the platen 2. In the present embodiment, the platen 2 includes a plate member having a certain thickness. The color (the surface color) of the platen 2 according to the present embodiment is colored.

The cutter 7a is arranged at a position right above the platen 2. The cutter 7a contacts a portion of the colored medium S on the platen 2 while the colored medium S is placed on the platen 2, and in this manner, such a portion is cut.

The base member 3 is a base forming a bottom wall of the present device 1. As illustrated in FIG. 2, a portion of the colored medium S in the vicinity of the front opening of the present device 1 is placed on an upper surface of the base member 3. The platen 2 is attached to a back portion of the base member 3 in a state in which a medium placing surface (the upper surface) of the platen 2 is at the same height position as that of a medium placing surface (the upper surface) of the base member 3. The platen 2 and the base member 3 may be separated from each other, or may be integrally formed from the same member.

The pinch rollers 4 and the drive rollers 5 are equivalent to a conveyance mechanism, and are configured to convey the colored medium S in the present device 1. The pinch rollers 4 are rotatably supported by a rotary shaft 4a placed at a position right above a front portion of the base member 3. By the rotary shaft 4a, two pinch rollers 4 are supported with a spacing in an axial direction of the rotary shaft 4a. Each pinch roller 4 is arranged at a position contacting an end portion (in a precise sense, an end portion in the axial direction of the rotary shaft 4a) of the conveyed colored medium S. The axial direction of the rotary shaft 4a is along a horizontal width direction of the present device 1, and in a precise sense, is along a movement direction (hereinafter referred to as a "carriage movement direction") of the later-described carriage 6. The carriage movement direction is equivalent to a slide movement direction of a moving body.

A pressing roller 4b is arranged at a position between the pinch rollers 4 in the axial direction of the rotary shaft 4a. The pressing roller 4b is configured to reduce lifting of the colored medium S from the platen 2 during conveying.

The drive rollers 5 are each housed in not-shown recesses formed at the front portion of the base member 3, and as illustrated in FIG. 2, are each arranged facing the pinch rollers 4 in the upper-to-lower direction. Each drive roller 5 is provided such that an outer peripheral portion thereof contacts an outer peripheral portion of a corresponding one of the pinch rollers 4. A rotary shaft (not shown) of the drive rollers 5 is along the rotary shaft 4a of the pinch rollers 4, and a motor (hereinafter referred to as a "drive roller motor 5a") is connected to an end portion of the rotary shaft of the drive rollers 5. When the drive roller motor 5a is started, the drive rollers 5 rotate, and the pinch rollers 4 also rotate accordingly.

Both rollers rotate in a state in which the colored medium S is nipped between the outer peripheral portion of each pinch roller 4 and the outer peripheral portion of each drive roller 5, and in this manner, the colored medium S moves (is conveyed) in the present device 1. A conveyance direction of the colored medium S described herein is a direction perpendicular to the rotary shaft 4a of the pinch rollers 4, and is a direction along a depth direction (a front-to-back direction) of the present device 1.

A rotation direction of the drive roller motor 5a is freely switchable. When the drive roller motor 5a rotates forward, the pinch rollers 4 and the drive rollers 5 rotate to convey the colored medium S toward a far side (the back side) of the present device 1. Conversely, when the drive roller motor 5a rotates backward, the pinch rollers 4 and the drive rollers 5 rotate to convey the colored medium S toward a near side (the front side) of the present device 1. As described above, in the present embodiment, the colored medium S in the present device 1 can reciprocate back and forth.

The carriage 6 is equivalent to the moving body, and slidably moves with the cutting pen 7 being held. The carriage 6 is arranged at a position facing the platen 2 in the upper-to-lower direction as illustrated in FIG. 2. The carriage 6 is supported by guide members 9 extending along the horizontal width direction of the present device 1. The guide members 9 are provided with a drive mechanism (not shown) for slidably moving the carriage 6 along the guide members 9. The drive mechanism includes a motor (hereinafter referred to as a "carriage motor 6a"), and is configured to pull, e.g., a wire or a belt attached to the carriage 6 by means of motor rotation force to slidably move the carriage 6. In this state, the carriage 6 slidably moves with the carriage 6 facing the platen 2 in the upper-to-lower direction.

The actuator 8 is attached to the carriage 6 as illustrated in FIG. 1, and the cutting pen 7 is held by the actuator 8. The cutting pen 7 is a pen-shaped member configured such that a cutter (in a precise sense, a cutter blade) is attached to a tip end (a lower end) of the pen-shaped member. The actuator 8 is a linear actuator, and is configured to move (lift or lower) the cutting pen 7 in the upper-to-lower direction. When the actuator 8 lowers the cutting pen 7, the cutter 7a attached to the tip end of the cutting pen 7 pressure-contacts the colored medium S on the platen 2, and sticks in the colored medium S. Conversely, when the actuator 8 lifts the cutting pen 7, the cutter 7a at the tip end of the cutting pen 7 retreats away from the colored medium S on the platen 2.

In the present device 1, the carriage 6 moves in the horizontal width direction of the present device 1, and the pinch rollers 4 and the drive rollers 5 convey the colored medium S in the depth direction (the front-to-back direction) of the present device 1. In this manner, the cutter 7a at the tip end of the cutting pen 7 moves, in a two-dimensional direction, relative to the colored medium S placed on the platen 2. In the present device 1, the cutter 7a freely moves so that the cutting target portion of the colored medium S can be cut in an optional shape. In other words, in the course of cutting the cutting target portion of the colored medium S, the carriage 6 moves while causing the cutter 7a to contact an outer edge of the cutting target portion of the colored medium S supported by the platen 2.

### <<Control System of Cutting Device according to the Present Embodiment>>

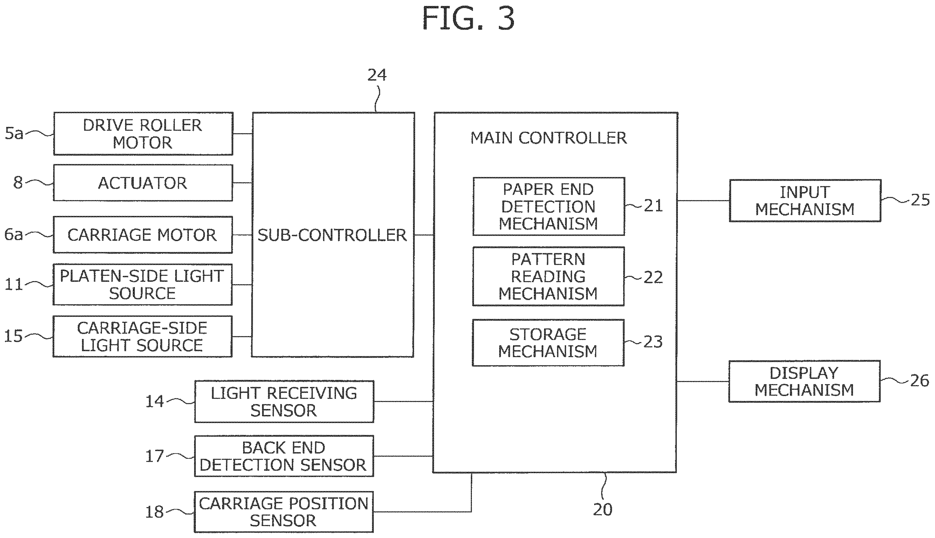

A configuration regarding a control system of the present device 1 will be described with reference to FIG. 3. FIG. 3 is a block diagram of the configuration regarding the control system of the present device 1. Each unit of the present device 1 is controlled by a main controller 20 illustrated in FIG. 3. The main controller 20 is equivalent to a control device, and is configured to control, via a sub-controller 24, each unit of the present device 1, specifically the drive roller motor 5a, the carriage motor 6a, and the actuator 8. The sub-controller 24 includes a control circuit, and is configured to output a control signal to control target equipment.

An input mechanism 25 and a display mechanism 26 are provided at the present device 1. The input mechanism 25 is configured to receive input for manually operating the carriage 6, the drive rollers 5, etc. when a user of the present device 1 performs various types of setting (e.g., setting of the color of the colored medium S). The display mechanism 26 is configured to display the contents of the setting by the user of the present device 1 and display, e.g., a message for alerting an error upon occurrence of an abnormality.

Various sensors are attached to the present device 1. The main controller 20 is configured to receive an output signal from the sensor to analyze the signal, thereby monitoring, e.g., the status of each unit of the present device 1 and obtaining an index necessary for execution of the cutting processing. The above-described sensors include, for example, a carriage position sensor 18. The carriage position sensor 18 includes a rotary encoder (not shown) connected to an output shaft of the carriage motor 6a, and is used for specifying the current position of the carriage 6 in the carriage movement direction. The main controller 20 is configured to specify the current position of the carriage 6 based on output from the carriage position sensor 18.

The sensors in the present device 1 include a sensor for pattern reading. Patterns targeted for reading will be described. As illustrated in FIG. 1, the pattern is a linear pattern formed as a portion of the image on the surface of the medium upon formation of such an image, and is a pattern (hereinafter referred to as a "reference pattern P") indicating a reference position in the present device 1 when a portion (the cutting target portion) of the image-formed medium is cut. An L-shaped pattern and a cross-shaped pattern are formed as the reference patterns P. The L-shaped reference pattern P is formed at each of four corners of a rectangular region set to include the cutting target portion. The cross-shaped reference pattern P is formed at a position outside the rectangular region at a center portion of such a region in a longitudinal direction thereof. By reading of these reference patterns P, the reference position when the cutting target portion of the image-formed medium is specified is recognized.

The shape and formation position of the reference pattern P are not specifically limited. As long as the color of the formed reference pattern P is different from the ground color of the colored medium S, the color of the formed reference pattern P can be freely set, and a color with a greater color difference from the ground color of the colored medium S is preferable.

In the present device 1, a light receiving sensor 14 is provided as a sensor configured to read the above-described reference pattern P. The light receiving sensor 14 is, together with a light source (hereinafter referred to as a "carriage-side light source 15") including an LED, attached to the carriage 6, and moves integrally with the carriage 6. As illustrated in FIG. 1, a sensor storage box 16 opening at a lower end is attached to a side wall of the carriage 6, and the light receiving sensor 14 and the carriage-side light source 15 are stored in the sensor storage box 16. The carriage 6 includes the light receiving sensor 14 and the carriage-side light source 15 stored in the sensor storage box 16, and slidably moves integrally with these components.

The carriage-side light source 15 is equivalent to an irradiator, and is configured to irradiate the colored medium S supported on the platen 2 with light. After having passed through the lower end opening of the sensor storage box 16, the light irradiated by the carriage-side light source 15 travels toward the platen 2 positioned right below the carriage 6. In this state, when the colored medium S is placed on the platen 2, the above-described light is reflected on the surface of the colored medium S.

The light receiving sensor 14 includes a reflective photo sensor, and is configured to receive reflected light resulting from reflection of the irradiated light from the carriage-side light source 15 on the surface of the colored medium S. The light receiving sensor 14 outputs, to the main controller 20, a signal corresponding to optical properties (e.g., the spectrum of the reflected light) of the received reflected light. When receiving the output signal from the light receiving sensor 14, the main controller 20 specifies the optical properties (e.g., the spectrum of the reflected light) of the reflected light as an index value regarding the reflected light.

The main controller 20 controls the drive roller motor 5a and the carriage motor 6a to move the drive rollers 5 and the carriage 6 while controlling the carriage-side light source 15 to irradiate the colored medium S with the light. In this manner, the carriage-side light source 15 moves relative to the colored medium S in the two-dimensional direction while irradiating each surface portion of the colored medium S with the light. Similarly, the light receiving sensor 14 moves relative to the surface of the colored medium S in the two-dimensional direction while receiving the reflected light. In this manner, the light reflected on each surface portion of the colored medium S is received by the light receiving sensor 14, and the main controller 20 specifies the optical properties of the reflected light reflected on each surface portion of the colored medium S.

The optical properties of the reflected light as described herein are different between the case of reflection on a surface region of the colored medium S where the reference pattern P is formed and the case of reflection on other regions. Based on the above-described optical property difference, the main controller 20 detects the reference pattern P formed on the surface of the colored medium S, and specifies the formation position of the reference pattern P. That is, the main controller 20 includes, as one function, a pattern reading mechanism 22. The pattern reading mechanism 22 is equivalent to a pattern detection mechanism, and is configured to detect (read) the reference pattern P formed on the surface of the colored medium S based on the index value (the optical properties) regarding the reflected light received by the light receiving sensor 14.

### <<Medium End-Detecting Method in the Present Embodiment >>

In the present device 1, the main controller 20 has the function of detecting a paper end as an end of the medium. In other words, the main controller 20 includes, as one function, a paper end detection mechanism 21. The paper end detection mechanism 21 is equivalent to a detection mechanism, and is configured to detect the end of the image-formed medium, more specifically tip and side ends of the medium. The tip end of the medium is an end positioned on a downstream side (the far side) in the conveyance direction. The side end of the medium is an end in the carriage movement direction (equivalent to a slide direction of the carriage 6).

The paper end detection mechanism 21 can detect the end of the colored medium S. More specifically, a medium end has been typically detected using a difference in optical properties between reflected light when light is reflected on a medium surface and reflected light when light is reflected on a member (e.g., the platen 2) present outside a medium. However, such a method is unsuitable for a case where the color of a medium is colored. In particular, in a case where the color of a medium and the color of a member (e.g., the platen 2) present outside the medium are close to each other, it is more difficult to detect a medium end by the above-described method.

On the other hand, in the present embodiment, the medium end can be detected by other methods than the above-described method, and even the tip and side ends of the colored medium S can be properly detected. Hereinafter, a medium end-detecting configuration employed in the present device 1 and the method for detecting the medium end based on such a configuration will be described.

The present device 1 has a light emitter and a light receiver for detecting the medium end. The light emitter includes a light emission unit 10 attached to the platen 2. The light receiver includes the above-described light receiving sensor 14.

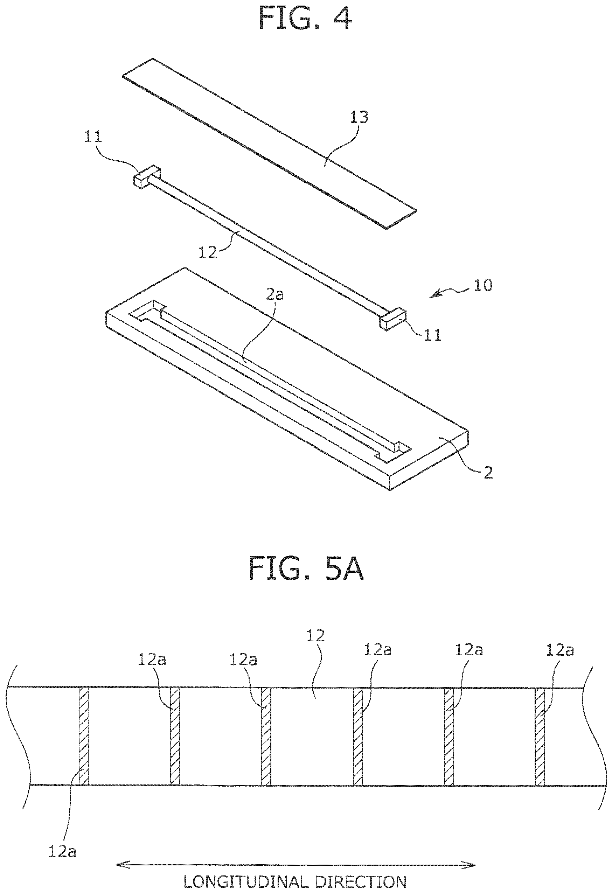

Details of the light emission unit 10 as the light emitter will be described with reference to FIGS. 1, 2, and 4. FIG. 4 is a view of the platen 2 and the light emission unit 10 at a stage prior to attachment to the platen 2. The light emission unit 10 is housed in a groove 2a formed at the platen 2. As illustrated in FIGS. 1 and 4, the groove 2a is formed at the upper surface of the platen 2, and extends long along the horizontal width direction (i.e., the carriage movement direction) of the present device 1. Each end portion of the groove 2a in a longitudinal direction thereof is wider than other portions, and has a greater depth (a greater length in the front-to-back direction of the present device 1) than other portions.

As illustrated in FIG. 2, the cutting pen 7 held by the carriage 6 is arranged above the groove 2a. The cutter 7a attached to the tip end (the lower end) of the cutting pen 7 is present at a position right above the groove 2a. Thus, when the carriage 6 slidably moves, the cutter 7a passes through the vicinity of an opening of the groove 2a. In this state, when the actuator 8 lowers the cutting pen 7, the cutter 7a moves with a tip end portion thereof being at a predetermined height position.

Components of the light emission unit 10 will be described. As illustrated in FIG. 4, platen-side light sources 11 and a light guide body 12 are main components of the light emission unit 10. The platen-side light source 11 is equivalent to a light source of the light emitter, and for example, includes an LED. In the present embodiment, two platen-side light sources 11 are used. Note that the number of platen-side light sources 11 is not specifically limited, and can be determined as necessary. The type of light source is not specifically limited, and other light emission bodies than the LED may be used.

The light guide body 12 is configured to transmit light from the platen-side light sources 11. In the present embodiment, the light guide body 12 includes an elongated member, and specifically, includes an acrylic rod-shaped member. The above-described platen-side light sources 11 are each attached to both end portions of the light guide body 12 in a longitudinal direction thereof. The light emitted from the platen-side light sources 11 is guided into the light guide body 12 from the ends of the light guide body 12 in the longitudinal direction thereof, and propagates in the light guide body 12.

As illustrated in FIG. 5A, multiple scratch-shaped recessed portions 12a are formed at predetermined intervals along the longitudinal direction of the light guide body 12 at an outer surface of the light guide body 12. FIG. 5A is an enlarged view of a portion of the light guide body 12. The recessed portion 12a functions as a so-called prism portion, and is for diffusely reflecting the light traveling in the light guide body 12. The light guided from the platen-side light sources 11 into the light guide body 12 travels in the light guide body 12, and when reaching the recessed portion 12a, is diffusely reflected on the recessed portion 12a. In this manner, the light is released from each portion of the light guide body 12, and is emitted from the substantially entirety of the light guide body 12.

A formation pattern of the recessed portions 12a at the light guide body 12 will be described. As illustrated in FIG. 5A, the multiple recessed portions 12a having the same width (the same length in the longitudinal direction of the light guide body 12) may be formed at equal intervals along the longitudinal direction of the light guide body 12. Note that in the configuration illustrated in FIG. 5A, the light from the platen-side light source 11 is more attenuated at a light guide body 12 portion farther from the platen-side light source 11, and the amount of light emission (the degree of light emission) at such a portion is smaller. That is, unevenness in the light emission amount at each portion of the light guide body 12 is caused.

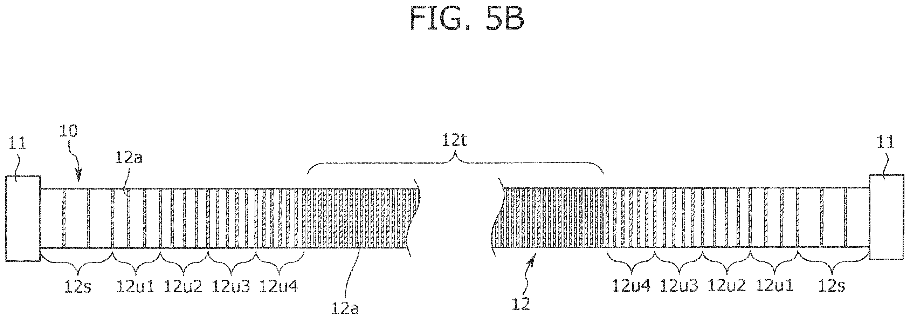

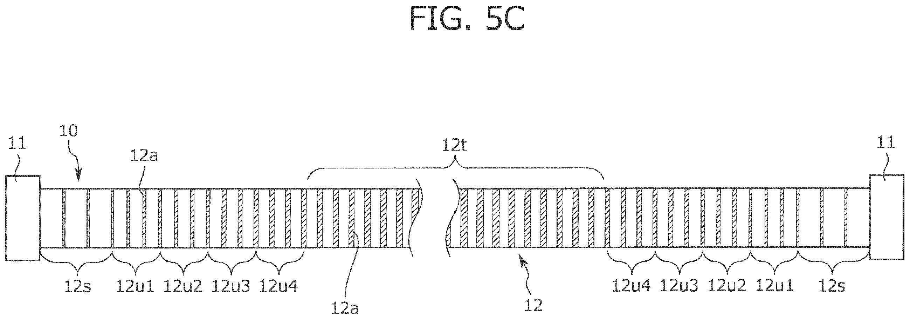

For a uniform light emission amount among portions of the light guide body 12, the formation pattern of the recessed portions 12a at the light guide body 12 may be set to a pattern illustrated in FIG. 5B or 5C. FIGS. 5B and 5C are views of variations of the formation pattern of the recessed portions 12a at the light guide body 12. For the sake of convenience in illustration, FIGS. 5B and 5C illustrate each portion of the light guide body 12 in a simple manner to a certain extent, and the size of the recessed portion 12a with respect to the light guide body 12 and the interval between the recessed portions 12a are different from actual size and interval.

The formation patterns of the recessed portions 12a as illustrated in FIGS. 5B and 5C will be described. In cases illustrated in FIGS. 5B and 5C, the light guide body 12 is divided into multiple regions in the longitudinal direction of the light guide body 12. Specifically, the light guide body 12 is, in the longitudinal direction thereof, divided into end regions 12s closest to the platen-side light sources 11, a center region 12t farthest from the platen-side light sources 11, and multiple transition regions 12u1, 12u2, 12u3, 12u4 interposed between each end region 12s and the center region 12t. The transition regions 12u1, 12u2, 12u3, 12u4 are regions having the substantially equal width in the longitudinal direction of the light guide body 12 and having a smaller width than those of the end regions 12s and the center region 12t.

In each region (i.e., the end regions 12s, the center region 12t, and the transition regions 12u1, 12u2, 12u3, 12u4), multiple recessed portions 12a are formed at equal intervals (pitches). In the configuration illustrated in FIG. 5B, the interval (i.e., the interval between the recessed portions 12a) between adjacent two of the recessed portions 12a in the longitudinal direction of the light guide body 12 varies according to the region. Specifically, the interval between the recessed portions 12a is the longest in the end region 12s, and is the shortest in the center region 12t. In the multiple transition regions 12u1, 12u2, 12u3, 12u4, the interval between the recessed portions 12a becomes shorter in the region farther from the platen-side light source 11.

In the configuration illustrated in FIG. 5C, the width (the length in the longitudinal direction of the light guide body 12, and in a precise sense, the width of the opening of the scratch-shaped recessed portion 12a) of the recessed portion 12a varies according to the region. Specifically, the width of the recessed portion 12a formed in the end region 12s is the shortest, and the width of the recessed portion 12a formed in the center region 12t is the longest. In the multiple transition regions 12u1, 12u2, 12u3, 12u4, the width of the recessed portion 12a becomes shorter in the region farther from the platen-side light source 11.

According to the above-described configuration illustrated in FIG. 5B or the above-described configuration illustrated in FIG. 5C, in the region farther from the platen-side light source 11 in the light guide body 12, the density and size of the recessed portions 12a formed in such a region are greater. Thus, the amount of reflected light propagating from the platen-side light source 11 increases. In this manner, when the light is transmitted from the platen-side light source 11 in the light guide body 12, the light is more attenuated with a distance from the platen-side light source 11, but the amount of reflected light is greater in the region farther from the platen-side light source 11. As a result, the amount of light emission becomes substantially uniform among portions of the light guide body 12. Note that both of a change in the width between the recessed portions 12a according to the region as illustrated in FIG. 5B and a change in the width of the recessed portion 12a according to the region as illustrated in FIG. 5C may be performed.

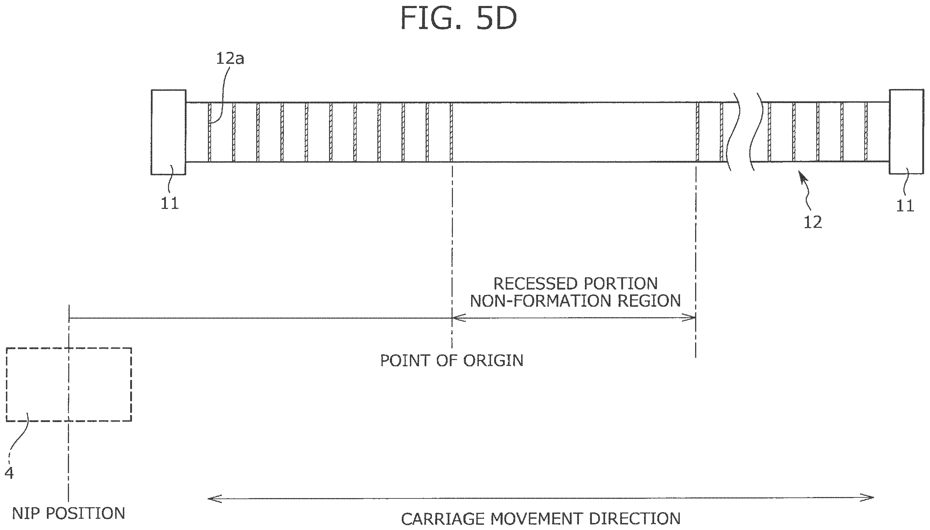

In FIGS. 5A to 5C, the recessed portions 12a are formed in the region of the light guide body 12 in the longitudinal direction thereof. However, the present invention is not limited to above. The recessed portions 12a are not necessarily formed in a region of the light guide body 12 where no light needs to be emitted, specifically a portion of the light guide body 12 where the medium inevitably passes right above such a portion of the light guide body 12 upon conveyance of the medium. In a more precise sense, a nip position between the left pinch roller 4 and the left drive roller 5 is taken as the reference position, and the position (the set position) of the light guide body 12 apart from the reference position in the carriage movement direction by a predetermined distance is taken as the point of origin. As illustrated in FIG. 5D, no recessed portions 12a need to be formed in the area (a recessed portion non-formation region in FIG. 5D) of the light guide body 12 expanded from the point of origin as an end position by a predetermined width. FIG. 5D is a view of another variation of the formation pattern of the recessed portions 12a at the light guide body 12. For the sake of convenience in illustration, FIG. 5D illustrates each portion of the light guide body 12 in a simple manner to a certain extent, and the size of the recessed portion 12a with respect to the light guide body 12 and the interval between the recessed portions 12a are different from the actual size and interval.

According to the configuration illustrated in FIG. 5D, in the area of the light guide body 12 where no recessed portions 12a are provided, light attenuation in such an area is reduced by an amount corresponding to prevention of light reflection by the recessed portions 12a. With this configuration, the light from the platen-side light sources 11 can properly propagate to the vicinity of the end position in the light guide body 12 upon detection of the end position of the colored medium S, and light from the light guide body 12 can be properly released in the vicinity of the end position. As a result, the end position of the colored medium S can be more properly detected.

The light emission unit 10 operates in a state in which the light emission unit 10 is housed in the groove 2a of the platen 2. Specifically, light emitted by turning ON of the platen-side light sources 11 propagates in the light guide body 12, and is diffusely reflected on the recessed portions 12a. In this manner, the substantially entirety of the light guide body 12 emits the light. The light emitted from the light guide body 12 heads to the outside of the groove 2a through the opening of the groove 2a. ON/OFF of the platen-side light sources 11 is controlled by the main controller 20 via the sub-controller 24.

In the present embodiment, the opening of the groove 2a is closed by a translucent film 13 illustrated in FIG. 4. Thus, the light emitted from the light guide body 12 heads to the outside of the groove 2a through the translucent film 13. The opening of the groove 2a is closed by the translucent film 13, and therefore, damage of the light emission unit 10 (particularly, the light guide body 12) housed in the groove 2a by the cutter 7a positioned right above the groove 2a can be reduced.

The light receiving sensor 14 as the light receiver will be described again. The light receiving sensor 14 is attached to the carriage 6, and slidably moves integrally with the carriage 6. That is, the light receiving sensor 14 is configured freely movable. As illustrated in FIGS. 1 and 2, the light receiving sensor 14 is attached to the carriage 6 with the light receiving sensor 14 facing the opening of the groove 2a in the upper-to-lower direction. That is, the light receiving sensor 14 is arranged at a position facing the light emission unit 10 in the upper-to-lower direction, specifically a position right above the light emission unit 10. Thus, light emitted from the light emission unit 10 (in other words, light emitted out of the light guide body 12) heads to the outside of the groove 2a through the translucent film 13, and is received by the light receiving sensor 14 at the position right above the light emission unit 10.

When the colored medium S is interposed between the light emission unit 10 and the light receiving sensor 14, the light receiving sensor 14 does not receive the light from the light emission unit 10. That is, the pinch rollers 4 and the drive rollers 5 convey the colored medium S through a portion between the light emission unit 10 and the light receiving sensor 14 in the upper-to-lower direction. As illustrated in FIG. 2, the platen 2 supports the colored medium S between the light emission unit 10 and the light receiving sensor 14 in the upper-to-lower direction. In this state, when the colored medium S is interposed between the light emission unit 10 and the light receiving sensor 14, the light from the light emission unit 10 is blocked by the colored medium S, and therefore, the light receiving sensor 14 does not receive such light.

As described above, the degree of light reception by the light receiving sensor 14 is switched for the light emitted from the light emission unit 10 depending on the presence or absence of the colored medium S between the light emission unit 10 and the light receiving sensor 14. Moreover, the presence or absence of the colored medium S between the light emission unit 10 and the light receiving sensor 14 is switched according to the position of the light receiving sensor 14 relative to the colored medium S.

More specifically, the light receiving sensor 14 slidably moves integrally with the carriage 6, and in this manner, the position of the light receiving sensor 14 relative to the colored medium S changes. Similarly, in a case where the pinch rollers 4 and the drive rollers 5 convey the colored medium S, the above-described relative position also changes. In association with a change in the above-described relative position, the presence or absence of the colored medium S between the light emission unit 10 and the light receiving sensor 14 is switched.

When the above-described relative position is a position at which the colored medium S is not interposed between the light emission unit 10 and the light receiving sensor 14, the state of the light receiving sensor 14 is a state in which the light receiving sensor 14 receives the light emitted from the light emission unit 10. Hereinafter, such a state will be referred to as a "first state."

Conversely, when the above-described relative position is a position at which the colored medium S is interposed between the light emission unit 10 and the light receiving sensor 14, the state of the light receiving sensor 14 is a state in which the light emitted from the light emission unit 10 is blocked by the colored medium S and is not received by the light receiving sensor 14. Hereinafter, such a state will be referred to as a "second state."

When the state of the light receiving sensor 14 is switched from one of the first and second states to the other one of the first and second states, such switching is taken as a trigger to detect the end of the colored medium S by the paper end detection mechanism 21. That is, when the light receiving sensor 14 moves relative to the colored medium S to pass above the end of the colored medium S, the state of the light receiving sensor 14 is switched. In the present device 1, such a state change is recognized, and in this manner, the end of the colored medium S is detected. Thus, even the end of the colored medium S can be properly detected.

In the present embodiment, the light receiving sensor 14 configured to detect (read) the reference pattern P is also used as the light receiver configured to detect the end of the colored medium S. With this configuration, it is not necessary to separately place a light receiver for medium end detection, and an increase in the number of components can be suppressed. Note that the present invention is not limited to above, and the light receiver for medium end detection may be provided separately from the light receiving sensor 14.

The method for detecting the medium end will be described based on the configuration described so far. Hereinafter, a situation where the tip end of the colored medium S is detected and a situation where the side end of the colored medium S is detected will be separately described.

### (Method for Detecting Tip End of Medium)

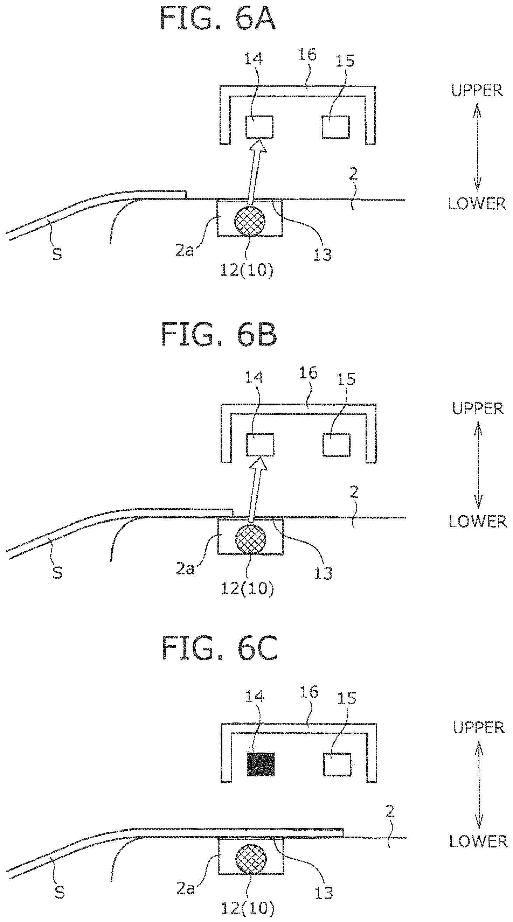

The method for detecting the tip end of the colored medium S will be described with reference to FIGS. 6A to 6C. FIGS. 6A to 6C are views for describing the method for detecting the tip end of the colored medium S, and are schematic views of a state when the colored medium S is being conveyed. The state of each type of equipment illustrated in the figure transitions in the order of FIG. 6A, FIG. 6B, and FIG. 6C. Moreover, the upper-to-lower direction is indicated by an arrow in the figure. Further, in each figure, the state of the light receiving sensor 14 is represented by a color. Specifically, the light receiving sensor 14 in the first state is indicated by white, and the light receiving sensor 14 in the second state is indicated by black.

When the colored medium S is injected into the front opening of the present device 1, the pinch rollers 4 and the drive rollers 5 start driving to convey the colored medium S. In this state, the carriage 6 stands by at the initial position (e.g., a center position in a movement area of the carriage 6) in the carriage movement direction.

The colored medium S is conveyed by the pinch rollers 4 and the drive rollers 5. Thus, the colored medium S moves toward the downstream side (the back of the present device 1) in the conveyance direction, and eventually moves over a front end portion of the platen 2 as illustrated in FIG. 6A. At this point, the colored medium S is not interposed between the light emission unit 10 and the light receiving sensor 14 yet, and therefore, the light receiving sensor 14 receives the light emitted from the light emission unit 10 in the first state.

Thereafter, when the pinch rollers 4 and the drive rollers 5 continuously convey the colored medium S to the downstream side in the conveyance direction, the colored medium S moves on the platen 2. The state of the light receiving sensor 14 is maintained in the first state as illustrated in FIG. 6B until right after the colored medium S has reached the groove 2a of the platen 2.

When the pinch rollers 4 and the drive rollers 5 further convey the colored medium S to the downstream side in the conveyance direction, the colored medium S reaches a position at which the colored medium S is supported by the platen 2 with the colored medium S extending over the groove 2a as illustrated in FIG. 6C. When the colored medium S is at such a position, the colored medium S is interposed between the light emission unit 10 and the light receiving sensor 14, and therefore, the state of the light receiving sensor 14 transitions to the second state. That is, the light emitted from the light emission unit 10 is blocked by the colored medium S, and the light receiving sensor 14 no longer receives such light.

When the state of the light receiving sensor 14 (in other words, the degree of light reception by the light receiving sensor 14) is switched by conveyance of the colored medium S by the pinch rollers 4 and the drive rollers 5, such switching is taken as a trigger to detect the tip end of the colored medium S by the paper end detection mechanism 21.

In the present embodiment, a back end (an end on an upstream side in the conveyance direction) of the colored medium S is not detected by the above-described detection method, but is detected by a back end detection sensor 17 illustrated in FIG. 2. The back end detection sensor 17 is attached to a region of the upper surface of the base member 3 positioned forward with respect to the platen 2, and is configured to detect the back end of the colored medium S when such a back end has passed above the sensor.

### (Method for Detecting Side End of Medium)

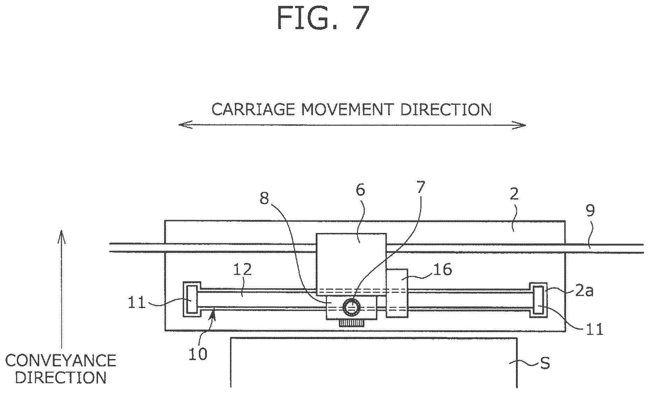

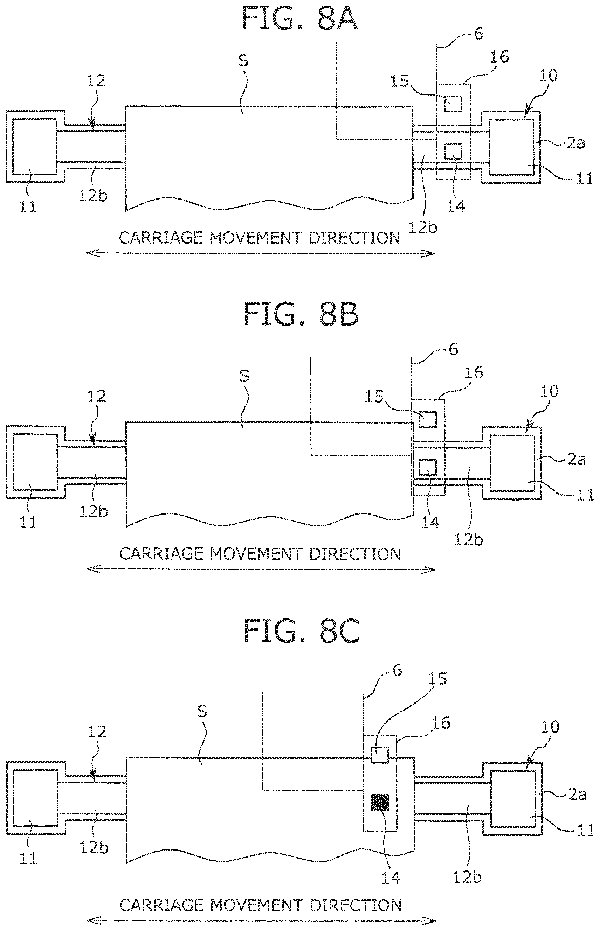

The method for detecting the side end of the colored medium S will be described with reference to FIG. 7 and FIGS. 8A to 8C. FIG. 7 is a view when the carriage 6 and the platen 2 are viewed from above. In the figure, the carriage movement direction and the conveyance direction are indicated by arrows.

FIGS. 8A to 8C are views for describing the method for detecting the side end of the colored medium S, and are schematic views of a state when the carriage 6 is slidably moving. The state of each type of equipment illustrated in the figure transitions in the order of FIG. 8A, FIG. 8B, and FIG. 8C. In the figure, the carriage movement direction is indicated by an arrow. In each figure, the state of the light receiving sensor 14 is represented by a color. Specifically, the light receiving sensor 14 in the first state is indicated by white, and the light receiving sensor 14 in the second state is indicated by black.

A relationship among the platen 2 attached to the light emission unit 10, the carriage 6 attached to the light receiving sensor 14, and the colored medium S upon detection of the side end of the colored medium S will be described with reference to FIG. 7.

Normally, the rectangular colored medium S is conveyed in such a posture that one side of the colored medium S is along the conveyance direction. Moreover, the groove 2a extending long is formed at the platen 2 on which the colored medium S is placed. As illustrated in FIG. 7, the length of the groove 2a in the longitudinal direction thereof, i.e., the entire length of the groove 2a, is sufficiently longer than the other side (the side perpendicular to the conveyance direction) of the conveyed colored medium S.

Moreover, as illustrated in FIG. 7, the light emission unit 10 housed in the groove 2a has the substantially same entire length as that of the groove 2a. In a precise sense, the length (the length of the groove 2a in the longitudinal direction thereof) of the groove 2a excluding both end portions having a greater depth and the length of the light guide body 12 in the longitudinal direction thereof are substantially equal to each other. That is, the length of the light guide body 12 in the longitudinal direction thereof is sufficiently longer than the other side (the side perpendicular to the conveyance direction) of the conveyed colored medium S.

Due to the above-described relationship, when the platen 2 supports the colored medium S, the colored medium S covers a portion of the groove 2a. In other words, the colored medium S supported by the platen 2 covers a portion of the light guide body 12 housed in the groove 2a. More specifically, other portions of the light guide body 12 than the end portions in the longitudinal direction are covered with the colored medium S, and on the other hand, the end portions in the longitudinal direction are exposed portions 12b exposed without being covered with the colored medium S. The light output from the light guide body 12 through the exposed portions 12b heads to the outside of the groove 2a through the translucent film 13. The light output from the light guide body 12 through other portions (i.e., the portions covered with the colored medium S) than the exposed portions 12b is blocked by the colored medium S.

Upon the cutting processing, the translucent film 13 supports a portion of the colored medium S supported by the platen 2, the portion being positioned right above the groove 2a. Of such a portion, a portion in which a blade edge of the cutter 7a is to stick is pushed from below.

While the colored medium S is supported by the platen 2, the carriage 6 slidably moves in a direction perpendicular to the conveyance direction, i.e., a direction along the other side of the colored medium S, as illustrated in FIG. 7. In this state, the carriage 6 slidably moves such that the light receiving sensor 14 passes right above the opening of the groove 2a.

The movement area of the carriage 6 (in other words, a movement area of the light receiving sensor 14) is sufficiently longer than the other side (the side perpendicular to the conveyance direction) of the conveyed colored medium S, and for example, is longer than the entire length of the groove 2a. Thus, while the carriage 6 moves from one end to the other end of the movement area, the light receiving sensor 14 initially faces the exposed portion 12b of the light guide body 12, and thereafter, passes above the portion covered with the colored medium S. Eventually, the light receiving sensor 14 faces the exposed portion 12b again.

When facing the exposed portion 12b of the light guide body 12, the light receiving sensor 14 is in the first state, and receives the light output from the light guide body 12 through the exposed portion 12b. On the other hand, when passing above the portion of the light guide body 12 covered with the colored medium S, the light receiving sensor 14 is in the second state, and does not receive the light from the light guide body 12.

As described above, the paper end detection mechanism 21 can detect the side end of the colored medium S. Hereinafter, the procedure of detecting the side end of the colored medium S will be described in detail with reference to FIGS. 8A to 8C. A situation where one (the right end of the colored medium S in FIGS. 8A to 8C) of the side ends of the colored medium S is detected will be assumed in description below. The following procedure is substantially similar to that when the other one (i.e., the left end of the colored medium S) of the side ends of the colored medium S is detected.

When the side end of the colored medium S is detected, the colored medium S is placed on the platen 2, and extends over the groove 2a as illustrated in FIG. 8A. In such a situation, the main controller 20 drives the carriage motor 6a through the sub-controller 24. In this manner, the carriage 6 slidably moves from one end to the other end of the movement area. The light receiving sensor 14 moves in the same direction as that of the carriage 6 in association with movement of the carriage 6.

For a while after the carriage 6 has started slidably moving, the light receiving sensor 14 faces, as illustrated in FIG. 8A, the exposed portion 12b of the light guide body 12, and receives the light output from the light guide body 12 through the exposed portion 12b. Meanwhile, the light receiving sensor 14 is in the first position because the light receiving sensor 14 is positioned outside the end of the colored medium S in the carriage movement direction, and receives the light emitted from the light emission unit 10.

When the carriage 6 continuously slidably moves toward the terminal end of the movement area, the light receiving sensor 14 continuously moves in association with movement of the carriage 6. The state of the light receiving sensor 14 is maintained in the first state as illustrated in FIG. 8B until right before the light receiving sensor 14 passes above the side end of the colored medium S in the carriage movement direction.

When the carriage 6 further slidably moves, the light receiving sensor 14 moves, as illustrated in FIG. 8C, in the carriage movement direction in a region where the colored medium S is present (in other words, the light receiving sensor 14 passes above the portion of the light guide body 12 covered with the colored medium S) . During such a period, the colored medium S is interposed between the light emission unit 10 and the light receiving sensor 14, and therefore, the state of the light receiving sensor 14 transitions to the second state. That is, the light emitted from the light emission unit 10 is blocked by the colored medium S, and the light receiving sensor 14 no longer receives such light.

When the state of the light receiving sensor 14 (in other words, the degree of light reception by the light receiving sensor 14) is switched by movement of the carriage 6 as described above, such switching is taken as a trigger to detect the side end of the colored medium S by the paper end detection mechanism 21.

In the present device 1, the side end of the colored medium S is detected by the above-described procedure, and in this manner, the main controller 20 specifies the size (specifically, the length in the carriage movement direction) of the colored medium S. Specifically, the main controller 20 specifies the position of the carriage 6 by the carriage position sensor 18 when each side end of the colored medium S is detected, and specifies the size of the colored medium S from the specified position of the carriage 6.

In the present embodiment, after the side end of the colored medium S has been detected, the presence or absence of skew (i.e., whether or not the colored medium S is conveyed with the colored medium S being inclined with respect to the conveyance direction) can be further determined from such a detection result. More specifically, the side end is detected at two different positions of the colored medium S in the conveyance direction. Thereafter, it is determined whether or not the position of the side end detected at one of the two positions and the position of the side end detected at the other position shift from each other in the carriage movement direction. In a case where such a shift amount is equal to or greater than a certain value, it is determined that skew is present. In this case, the colored medium S is conveyed with the colored medium S being inclined with respect to the conveyance direction, error informing processing (e.g., displaying of an error message) may be executed to request the user of the present device 1 for re-setting of the colored medium S.

### <<Other Embodiments>>

One embodiment of the present invention has been described above. However, the above-described embodiment is for the sake of easy understanding of the present invention, and is not intended to limit the present invention. That is, changes and modifications can be made to the present invention without departing from the gist of the present invention, and needless to say, the present invention includes equivalents thereof.

In the above-described embodiment, the configuration example of the cutting device has been described as one example of the medium end-detecting device. Note that the present invention is also applicable to a case where an end of a colored medium S is detected in other medium end-detecting devices than the cutting device, such as a printer configured to form an image on a medium and a pen plotter configured to draw a line on a medium.

In the above-described embodiment, of the light emitter (specifically, the light emission unit 10) and the light receiver (specifically, the light receiving sensor 14), the light receiver moves, and the end of the colored medium S is detected in a movement direction of the light receiver. Note that the present invention is not limited to above, and the light emitter may move. Such a configuration will be described. The light source (specifically, the carriage-side light source 15) attached to the carriage 6 is utilized as the light emitter, and on the other hand, a line sensor (not shown) as the light receiver is attached to a platen 2 side. The line sensor is housed in the groove 2a of the platen 2, and the length of a line formed by a sensor group forming the line sensor is substantially equal to the entire length of the groove 2a. With this configuration, the end of the colored medium S in a movement direction (i.e., the carriage movement direction) of the light emitter can be detected.

In the above-described embodiment, the tip and side ends of the colored medium S are detected by the technique according to the medium end-detecting device of the present invention, and on the other hand, the back end of the colored medium S is detected by the back end detection sensor 17. Note that the present invention is not limited to above, and the back end of the colored medium S may be detected by a technique similar to that for the tip and side ends of the colored medium S.

### REFERENCE SIGNS LIST

1: present device (medium end-detecting device, cutting device)
2: platen (support member)
   2a: groove
3: base member
4: pinch roller (conveyance mechanism)
   4a: rotary shaft
   4b: pressing roller
5: drive roller (conveyance mechanism)
   5a: drive roller motor
6: carriage (moving body)
   6a: carriage motor
7: cutting pen
   7a: cutter
8: actuator
9: guide member
10: light emission unit (light emitter)
11: platen-side light source (light source)
12: light guide body
   12a: recessed portion
   12b: exposed portion
   12s: end region
   12t: center region
   12u1, 12u2, 12u3, 12u4: transition region
13: translucent film
14: light receiving sensor (light receiver)
15: carriage-side light source
16: sensor storage box
17: back end detection sensor
18: carriage position sensor
20: main controller
21: paper end detection mechanism (detection mechanism)
22: pattern reading mechanism (pattern detection mechanism)
23: storage mechanism
24: sub-controller
25: input mechanism
26: display mechanism
S: colored medium
P: reference pattern (pattern)

## Claims

1. A medium end-detecting device comprising:
a light emitter configured to emit light;
a light receiver arranged at a position facing the light emitter and configured to receive the light emitted from the light emitter;
a support member configured to support a colored medium between the light emitter and the light receiver; and
a detection mechanism configured to detect an end of the colored medium supported by the support member, wherein
one of the light emitter or the light receiver is freely movable, and
a degree of light reception by the light receiver is switched for the light emitted from the light emitter by movement of the one of the light emitter or the light receiver, and in this manner, the detection mechanism detects the end of the colored medium in a movement direction of the one of the light emitter or the light receiver.

2. The medium end-detecting device according to claim 1, wherein
a state of the light receiver changes, by movement of the one of the light emitter or the light receiver, between a first state in which the light receiver receives the light emitted from the light emitter and a second state in which the light emitted from the light emitter is blocked by the colored medium and is not received by the light receiver, and
the state of the light receiver is switched from one of the first and second states to the other one of the first and second states, and in this manner, the detection mechanism detects the end of the colored medium in the movement direction.

3. The medium end-detecting device according to claim 1 or 2, further comprising:
a moving body configured to slidably move with the moving body facing the support member, wherein
the one of the light emitter or the light receiver slidably moves integrally with the moving body in a state in which the one of the light emitter or the light receiver is attached to the moving body, and
the detection mechanism detects the end of the colored medium in a slide movement direction of the moving body.

4. The medium end-detecting device according to claim 3, further comprising:
a conveyance mechanism configured to convey the colored medium in a conveyance direction, wherein
the conveyance mechanism conveys the colored medium such that the colored medium passes through a portion between the light emitter and the light receiver in a height direction of the medium end-detecting device, and
the degree of light reception is switched by conveyance of the colored medium by the conveyance mechanism, and in this manner, the detection mechanism detects the end of the colored medium in the conveyance direction.

5. The medium end-detecting device according to claim 3 or 4, wherein
the medium end-detecting device is a cutting device configured to cut a cutting target portion from the colored medium having a surface on which an image is formed, and
the moving body includes a cutter, and moves while causing the cutter to contact an outer edge of the cutting target portion of the colored medium supported by the support member.

6. The medium end-detecting device according to claim 5, wherein
the moving body includes
an irradiator configured to irradiate the colored medium supported by the support member with light, and
a light receiving sensor configured to receive reflected light resulting from reflection of the irradiated light from the irradiator on the surface of the colored medium,
a pattern detection mechanism is further provided, the pattern detection mechanism being configured to detect, based on an index value regarding the reflected light received by the light receiving sensor, a pattern indicating a reference position upon cutting of the cutting target portion in the image formed on the surface of the colored medium, and
the light receiver includes the light receiving sensor, and as the one of the light emitter or the light receiver, slidably moves integrally with the moving body.

7. The medium end-detecting device according to claim 6, wherein
the light emitter includes a light source and a light guide body configured to transmit light from the light source,
the support member is provided with a groove for housing the light guide body, and
in a state in which the colored medium supported by the support member covers a portion of the light guide body housed in the groove, when the light receiver faces an exposed portion other than the portion covered with the colored medium in the light guide body housed in the groove, the light receiver receives light output from the light guide body through the exposed portion.

8. The medium end-detecting device according to claim 7, wherein
the light guide body includes an elongated member, and
multiple recessed portions formed for diffusely reflecting light travelling in the light guide body are, at the light guide body, provided in a longitudinal direction of the light guide body.

9. The medium end-detecting device according to claim 8, wherein
the light source is attached to an end portion of the light guide body in the longitudinal direction,
the light guide body includes a center region farther from the light source in the longitudinal direction, and an end region closer to the light source in the longitudinal direction,
multiple ones of the recessed portions are formed in each of the center region and the end region, and
an interval between the recessed portions in the center region is shorter than an interval between the recessed portions in the end region.

10. The medium end-detecting device according to claim 8, wherein
the light source is attached to an end portion of the light guide body in the longitudinal direction,
the light guide body includes a center region farther from the light source in the longitudinal direction, and an end region closer to the light source in the longitudinal direction,
multiple ones of the recessed portions are formed in each of the center region and the end region, and
a length of each recessed portion in the longitudinal direction in the center region is longer than a length of each recessed portion in the longitudinal direction in the end region.

11. The medium end-detecting device according to any one of claims 7 to 10, wherein
an opening of the groove is closed by a translucent film, and
the light receiver receives light having output from the light guide body through the exposed portion and having passed through the translucent film.
